# EUROPEAN PATENT SPECIFICATION

(11) **EP 0 446 193 B1**
(45) Date of publication and mention of the grant of the patent: **15.11.1995**
(21) Application number: 91850051.3
(22) Date of filing: 04.03.1991
(51) Int. Cl.: C03B 5/06, C03B 5/08

(54) **Method and apparatus for melting batch materials**
Verfahren und Vorrichtung zum Schmelzen von Rohstoffen
Procédé et dispositif pour la fusion de matières premières

(30) Priority: 05.03.1990 SE 9000766; 14.05.1990 SE 9001730; 22.05.1990 SE 9001847
(43) Date of publication of application: 11.09.1991
(73) Proprietor: SUPERUGNAR AKTIEBOLAG, 754 26 Uppsala (SE)
(72) Inventor: Svenson, Gunnar, S-754 28 Uppsala (SE)
(74) Representative: Bjellman, Lennart Olov Henrik

(56) References cited:
- FR-A- 390 321
- FR-A- 1 103 992
- FR-A- 1 448 172
- US-A- 1 471 824
- US-A- 1 529 480
- US-A- 2 541 310

## Description

The present invention relates to a method for melting glass batch materials at the glassworks. More particularly the invention relates to a method of creating a new different temperature profile in a pot furnace for production of melted glass, which eliminates several glass defect causes, as well as to a pot furnace in accordance with this new method.

### PRIOR ART

Glass for manual processing by glass-blowing is produced in a furnace by melting batch materials in a pot or a tank at a temperature of about 1400°C. Besides a refining agent, which produces gas for creating a certain amount of turbulence in the melt, the batch contains the basic ingredients for the glass. This turbulence is intended for creating a stirring effect in the melt which then improves the possibility to achieve a high quality glass containing no defects. Furnaces for this purpose are disclosed in a number of published patents, for example in CH-A-173 332, GB-A-1 121 778, US-A-941 148, US-A-2 761 890, US-A-3 742 111, US-A-4 143 232 and DE-A-1 796 039, respectively.

All of these patents except for the disclosed Swiss patent CH-A-173 332 presume use of a tank, while the present invention is intended for a pot. With the exception of the patent US-A-941 148 disclosing a tank for a gas or oil heated furnace the other five disclosures refferred to, do have a tank with electric electrodes within the melted glass. Such melting procedures from a view of industrial wellfare are not directly suitable for manual processing of the glass as the glass-blower is subjected to the risk of an electric shock when gathering glass out of the melt since the pipe, which is used, is made of conductive metal.

A French patent FR-A-390 321 from 1908 describes a gas heated furnace in which a desired temperature is achieved by regulating the pressure of gas delivered to burners positioned around the lower base of a furnace chamber. The flames of the burners will pass under and around a raised covered pot carried by a number of bricks placed on a fireproof table. Gas produced by any refining agent has to leave the melting batch trough a gathering opening, while the exhaust gas has to leave the furnace through a separate opening on top of the furnace. If a pot breaks the melted glass will go into a drain formed around the table and which will be emptied through a slanted channel and may be collected into a container.

In prior technique, similar to for example FR-A-390 321, the melting time has normally been some 36 hours or more and the whole cycle at least 48 hours. Today the demand is a melting cycle of 24 hours or less. When making the melting cycle short it must be secured that the gas produced by the glass batch is properly removed from the melted glass within the correct time interval. By making the cycle longer it will of course be secured that the major part of this gas utilized for stirring may be removed even with a non-proper temperature profile around the pot, but then a process of crystallization within the melted glass will become more and more effective and will instead destroy the glass quality.

The Swiss disclosure CH-173 332 is related to strong heating of the upper part of the batch which has proven to be an incorrect method as the refining agent at the top of the batch disappears directly into the air and will therefore to a large extent be consumed before the batch is melted into a glass. This disclosure further indicates that electric heaters will be placed simply above and below a pot, respectively. Besides, according to what was pointed out previously, viz. that the heater above the pot will have an unfavorable effect on the melting, this arrangement also results in glass vapour very easily forming a layer of glass covering the heater dripping back into the pot if this is of the open type and thereby introducing cords. Heating from below is better but the arrangement according to this invention may be dangerous as the method suffers from the constraint that the position of the electric heater easily permits glass in the pot to obtain an electric potential through creeping currents. Additionally, it is inevitable that glass spill will enter into the space underneath the pot resulting in a short-circuiting of the heaters after some time due to the accumulation of glass spill.

Prior art gas or oil heated furnaces were often used for the reason that it was asserted that the temperature in an electric furnace is too uniform to be able to produce real high quality glass. This is incorrect as primarily the quality of the glass produced will highly depend on the creation of the proper temperature profile in the furnace and consequently in the pot.

Another constraint of the furnaces according to the prior art is that only a part of the melted batch can be used, resulting in a need for certain furnaces to have up to 30% residue in the pot for each new cycling, and additionally these furnaces necessitate mixing of the batch with cullets to obtain a glass of an acceptable quality.

The trick for producing high quality glass is to create a proper temperature profile in the furnace to ensure a correct melting procedure for the batch and thereby to utilize the refining agent optimally. The proper temperature profile will then minimize the stirring or rotation of the fully melted glass in the pot to a low desired amount which will as a result reduce or avoid creation of cords and seeds, and consequently result in a production of very high quality glass and at the same time achieving a very high efficiency in the process of utilizing the gases produced by the batch.

### SUMMARY OF THE INVENTION

The invention relates to a method of melting glass batch materials in accordance with claim 1.

The invention also relates to pot furnaces for melting glass batch materials having the caracteristic features of claims 5 and 8.

Additionally, in a pot furnace according to the present invention containing either electric or gas/oil heaters the temperature is due to the arrangement of the heaters redistributed within the furnace and accordingly around the pot in such a way that the melting of the batch proceeds in the pot essentially from below and from the sides, whereby the refining agent will be optimally utilized especially in the lower part of the melt, and the gas forming seeds will early escape from this part as the melting process essentially proceeds from the bottom and the lower parts of the side walls of the pot and upwards.

By melting the batch in such a way, the gas achieved from the refining agent can more easily escape since it only has to move through a limited part of the melt and will then efficiently be vented through the still unmelted batch contrary to the commonly used procedure where the batch essentially melts from above and the produced gas in the form of seeds will have a progressively longer path for escaping from the melted glass resulting in the fact that a considerable part of such a melt will not produce an acceptable glass quality.

In an electric pot furnace, the new temperature profile is achieved partly by a matching design of the furnace chamber and with electric heaters arranged vertically aligned, i. e. in a circle around the pot without touching the pot or the sidewalls or bottom wall of the furnace chamber. The pot is for example placed on top of a number of supports having such a height over the bottom wall that direct radiation from the vertically aligned electric heaters extend below the bottom surface of the pot, and the radiation from those will principally access most of the bottom surface of the pot. The other part of this design uses cooling air for the terminal inlets of the electrical heaters and is adapted to be blown along the heaters, thereby reducing radiation and blowing convection air (heat) downwards in the furnace and depending on the somewhat stronger cooling of the upper portions of the heaters, additionally slightly lowering the electric resistance in that portion, will result in a slightly lower power and consequently lower temperature in the upper part of the furnace chamber. Correspondingly the lower portions of the electric heaters will have a slightly higher electric resistance and a corresponding higher temperature at a constant voltage over the electric heaters. The electric heaters are electrically controlled in a conventional fashion.

In a gas or oil heated pot furnace the new temperature profile is achieved partly by a matching design of the furnace chamber along with the main design for the electric furnace and partly by arranging a first lower burner at one end of a first heating channel discharging into a space under the pot, and at least one secondary upper burner in at least one secondary channel discharging into the upper and middle portions of the furnace chamber maintaining the temperature profile in the chamber at a properly balanced furnace pressure to permit easy gathering of glass through the gathering opening with low heat outlet. The first heating channel is sloping slightly downwards to prevents glass spill from reaching the burner in case of large amounts of glass spill entering the furnace chamber. If glass spill should reach the burner there is a great risk that it would be damaged and the operation of the furnace would be jeopardized. The burners are controlled, i. e. electrically, in a conventional fashion.

The supports on which the pot is placed are arranged in such a manner that the pot will lean about 5 cm towards the furnace door containing the gathering opening. Firstly, this implies that radiation/convection heat towards the front side of the pot will be increased, and secondly that the pot will be prevented from migrating backwards into the furnace chamber which otherwise sometimes is the case for pots with a mouth. At the same time, providing a larger distance between the pot and the door results in a higher temperature at the front side of the pot, the pot must still be readily accessible for a glass-blower's pipe to facilitate gathering of glass also deep down into the pot.

In order to more easily create such a well defined distance the pot is provided with a mouth or an elevated inclined edge projecting towards the gathering opening. This mouth of the pot prevents the batch and gathered glass from escaping between the pot and the inner side of the door and thereby after some time destroying it. Besides, at the same time it prevents glass from flowing back to the melt and introducing cords in the melt. Furthermore, the lower edge of the gathering opening is lowered to a level below the lower surface of the mouth of the pot whereby a matched stone, for instance suitable brick, is placed for a properly matched interference between the mouth of the pot and the lower portion of the gathering opening. As the different pots shrink by different amounts there will always be chosen a suitable measure of the stone and a fibre mold to achieve adequate sealing between the pot and the gathering opening resulting in minimizing the largest source of heat loss in such a pot furnace.

To compensate for the heat loss at the front of the furnace and to maintain the preferred temperature profile, the distance between the vertically aligned electric heaters is decreased at the front side of the furnace chamber. Similarly, in the gas and oil heated furnace the secondary burner/burners is/are positioned to deliver more energy at the front side of the furnace chamber.

This method and the pot furnace according to the method provide in addition to a more energy saving heating system of a pot furnace for glass also the following benefits:
a. the batch will be used without mixing with cullets;
b. the batch will be refilled for a new cycling without the necessity of having a residue of glass in the pot;
c. exclusively the batch will be put in the pot;
d. seeds and stones do not have to be removed from the larger pieces of glass for eliminating glass defects in a final product;
e. the quality of the produced glass is such that no part of this will have to be discarded nor will finished glass products have to be discarded due to glass defects.

### BRIEF DESCRIPTION OF THE DRAWINGS

The invention will be described by preferred embodiments to be contemplated with reference to the accompanying drawings wherein like reference numerals are used throughout to designate like parts. In the drawings:
- Fig. 1: illustrates a vertical cross section of an embodiment of an electrically heated pot furnace with an open or a semi-open pot according to the present invention;
- Fig. 2: illustrates a horizontal cross section of a pot furnace along the line II - II in Fig. 1;
- Fig. 3: illustrates a vertical cross section of an embodiment of a gas or oil heated pot furnace according to the present invention;
- Fig. 4: illustrates a vertical cross section along the line I - I in Fig. 3;
- Fig. 5: illustrates a horizontal cross section of the furnace in Fig. 4 showing a first embodiment of a heating chamber under the pot;
- Fig. 6: illustrates a horizontal cross section of the furnace in Fig. 4 showing a second embodiment of a heating chamber under the pot;
- Fig. 7: illustrates a horizontal cross section of the furnace in Fig. 4 showing a third embodiment of a heating chamber under the pot;
- Fig. 8: illustrates a vertical cross section of a gas or oil heated pot furnace according to a fourth embodiment of a heating chamber under the pot; and
- Fig. 9: illustrates a horizontal cross section of the furnace shown in Fig. 8.

### DETAILED DESCRIPTION OF PREFERRED EMBODIMENTS

A pot furnace according to the present invention comprises a furnace body 10 with a furnace door 11 incorporating a gathering opening 12. The furnace body defines a chamber by an inner wall 20, an upper floor surface 21 and a ceiling 22. The chamber is heated by a number of electric heaters 30 or gas or oil burners 32, 33 to a temperature in the order of 1400°C. Inside the chamber is placed a pot 40 which is filled with batch materials to be melted into a glass. The pot 40 can be either of a semi-open or an open type.

The upper floor surface 21 in the pot furnace contains in a first embodiment four supports 25 onto which the bottom surface 41 of the pot 40 is resting. These supports 25 are designed in a manner that the upper end surfaces of the supports forming a slightly inclined plane towards the furnace opening 12. The pot is thereby given a slight inclination forward of about 5 cm measured horizontally between the vertical planes of the bottom and top edge.

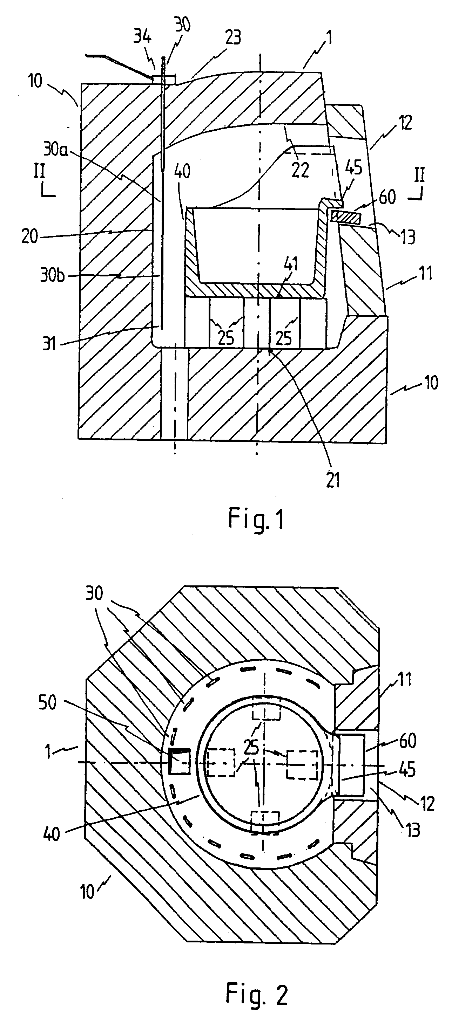

In a first embodiment electric heaters 30 are arranged hanging vertically down from the ceiling 22 of the furnace chamber along a circle of a diameter substantially larger than the outer diameter of the pot 40 and thus encircling the pot 40, as shown in Fig. 2, which is a cross section along the line II - II of Fig. 1. In this embodiment there are 12 equidistant heaters, but in a further preferred embodiment the number of heaters 30 may be different and distributed at different distances to each other to compensate a larger heat loss close to the furnace door 11 containing the gathering opening 12.

The heaters 30, i.e. type KANTHAL SUPER manufactured by Kanthal AB at Hallstahammar, Sweden, are vertically arranged such that their lower portions 31 are positioned at a predetermined distance above the upper floor surface 21 and in the same manner there is a predetermined distance between the heaters 30 and the side walls 20 of the furnace chamber. Additionally, the heaters 30 are arranged such that the lower portions 31 are positioned well below the bottom surface 41 of the pot 40 such that the bottom surface 41, except for the contact surfaces on top of the supports, will be fully exposed to direct heat radiation from the heaters 30.

Each heater 30 has a power inlet 34 or an electric terminal at a roof surface 23 with an arrangement to force air into the inlets 34 preventing glass from condensating between the terminals at the inlets 34 causing electric arcing, which destroys the power terminals as well as the hole in the brick-built roof of the furnace carrying the heaters. In the preferred embodiment this air is utilized blowing along the heaters such that each upper portion 30a of the heater will be cooled, whereby the heater due to a different temperature of the upper and lower portions will also be presenting slightly different electric resistances in these portions, and at a constant voltage across the heaters 30 those will produce a slightly higher power in the lower portions 30b compared to the upper portions 30a, which then are showing different electric resistances. In this way a temperature gradient is achieved along the heaters 30 and consequently a changed temperature profile is created inside the furnace chamber containing the pot 40.

This together with the arrangement having the bottom surface 41 of the pot directly exposed to radiation heat from the lower portions 30b of the heaters will further emphasize the desired temperature profile in the furnace, such that the furnace chamber will in an initial state have at least equal or higher temperature around the lower parts of the pot 40 compared to the rest of the chamber. According to this method it is ensured that the batch in the pot 40 is melted essentially from below and from the sides of the pot, whereby the refining agent will be optimally utilized especially in the lower part of the melt, and the gas forming seeds will early escape from this part as the melting process essentially proceeds from the bottom part of the pot and the lower part of the side walls and upwards.

By putting the heaters 30 into electric arrays, i. e. such that each third heater is fed from a common phase in a standard 3-phase system, a turbulence can be created in the furnace chamber by controlling the power of each array and thereby achieve that the turbulence in the glass will get a proper appearence.

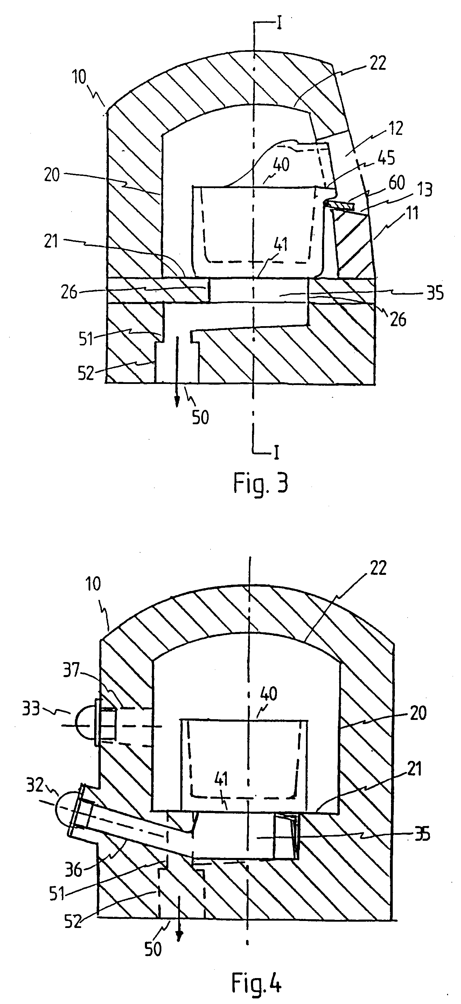

In a second embodiment of the pot furnace using gas or oil heaters, shown in Fig. 3, there is formed a chamber 35 underneath the pot 40. In the floor surface 21 there is then formed an opening 26 having a diameter less than the outer diameter of the pot 40. Consequently the pot will primarily be carried by an edge surface around its bottom surface 41.

In the furnace there is arranged a first channel 36, which discharges into a chamber 35 underneath the pot for heating of the pot 40. This channel is arranged inclined downwards and directed towards the chamber 35 and is, at the other end, provided with a first gas or oil burner, positioned at a level corresponding to the level of the floor surface 21 (or higher up) to prevent glass from flooding the burner if the pot should crack. In the upper portion of the furnace, there is additionally formed at least one secondary channel 37 supplying heat from at least one secondary burner 33 to the rest of the furnace chamber.

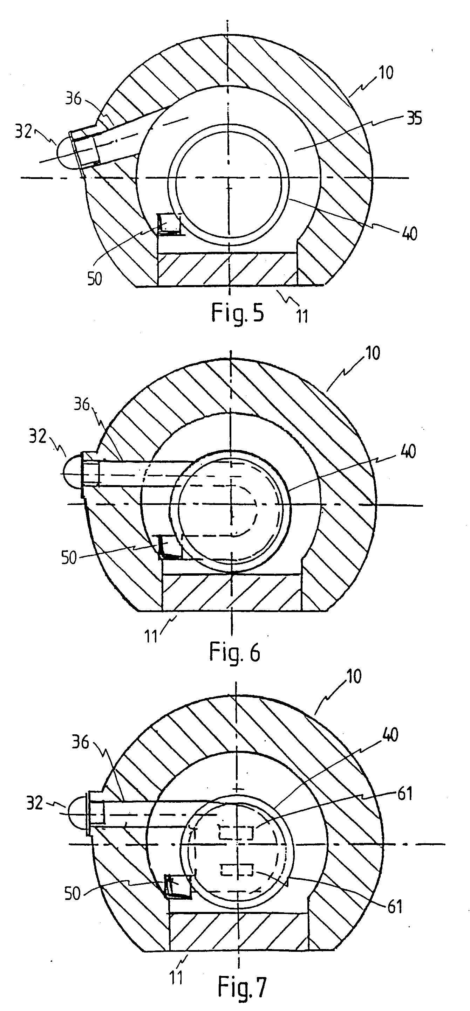

In the pot furnace according to Fig. 5, the channel 36 seen from above is tangentially feeding the chamber 35, while in a third embodiment this channel for heating is radially feeding the chamber 35. In Fig. 6, a third embodiment is demonstrated in which the channel 36 forms part of a loop underneath the pot 40, which then will experience an additional support under the bottom surface 41, further decreasing the strain on the bottom surface of the pot, but with some loss of efficiency in the general heating of the bottom surface. In Fig. 7, a corresponding arrangement is demonstrated but in this case the middle of the bottom surface is supported by a couple of supports 61 to obtain more space for the hot gases from the burner 32 to reach most of the bottom surface 41 of the pot 40.

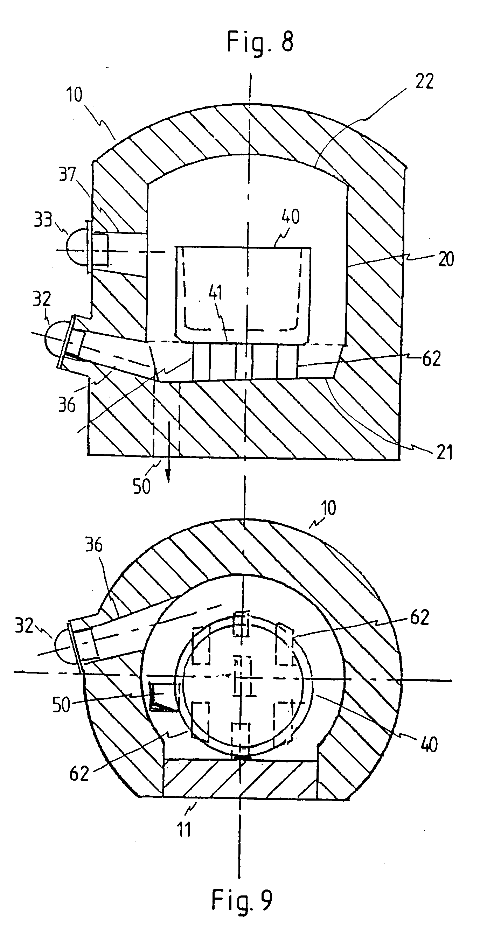

In Figs. 8 and 9, a fourth embodiment is demonstrated having the pot resting on a number of supports 62 similar to the supports 25 of the first embodiment in Fig 1. Channels 36 and 37 respectively with gas or oil burners 32 and 33, respectively, deliver heat to the furnace chamber in a predetermined manner to maintain the preferred temperature profile in the furnace chamber with an initially higher temperature in the lower portions of the furnace.

The pot is in the preferred embodiment provided with an elevated edge or a mouth 45. The lower inner surface of this edge or mouth 45 is inclined outwards and downwards. The furnace door 11 containing the gathering opening 12 is arranged such that an edge surface 13 of the gathering opening 12 is levelled below the lower edge surface of the mouth 45, and a suitable stone or brick is fitted on the edge surface 13 together with a fibre mold to achieve a sealing between the upper front of the pot and the gathering opening 12.

The pot furnace according to a preferred embodiment is additionally provided with a vertically arranged channel 50 exiting into a pocket for glass spill. This exit channel consists of a first portion 51 starting out in the chamber 35 underneath the pot and a second portion 52 having a larger cross section discharging into the pocket for glass spill while the hot exhaust emissions from the furnace are carried out separately through one or several exhaust channels, to for example a chimney.

Because of the inclination of the upper surface of the mouth and the fact that the pot itself is slightly inclined forwardly in the preferred embodiment due to the shape of the supports 25, 61, 62, gathered glass spill is prevented from flowing back into the pot introducing cords. Additionally the stone prevents batch and glass spill from escaping between the pot 40 and the furnace door 11. Besides preventing glass from accessing the inner side of the furnace door, the possibility to maintain the proper temperature around the pot is improved especially since the region around the gathering opening 12 is the area of the essential heat loss.

In an electric test furnace using an open pot having a diameter of 900 mm and a height of 700 mm there was achieved a percentage of defects in the glass of less than 2% when about 600 kg of melted glass was processed per day, and this from the top to the bottom of the pot. The power consumption during 24 hours of operation was 1 400 kWh, resulting in about 2.3 kWh per kilogram of glass with a density of 2.9 kg/dm³. The produced type was 24% lead crystal glass.

The above described preferred embodiment can, by those familiar with the technique, be varied and modified in many ways within the true spirit of the present invention and within the scope of the appended claims.

## Claims

1. A method for the melting of glass batch materials in a pot (40) inside a furnace (1) for production of melted glass intended primarily for manual processing, including the steps of filling of the pot (40) with the batch to be melted into glass and heating of the pot to achieve melted glass, comprising heating the pot from below and from aside about its circumference, and forming a temperature profile in the pot such that the melting of the glass batch in the pot (40) is primarily effected from the bottom and upwards and secondarily from the side walls and inwards inside the pot (40), said temperature profile being achieved by arranging a space region between the pot (40) and an upper floor surface (21) in the furnace and thereby initially heating this region to a slightly higher temperature than the rest of the furnace chamber, whereby the melting of the batch is proceeding essentially from below and from the sides of the pot towards the upper portion of the pot.

2. The method according to claim 1, said pot furnace comprising a variety of vertically hanging electric heaters (30) each of which is equipped with its own power inlet (34) arranged around the pot (40), wherein the bottom of the pot is exposed to heat directly radiated from the heaters (30), and cooling air primarily utilized to prevent the condensation of glass at the power terminal inlets (34) of the heaters is blown along the heaters (30) for cooling of said heaters downwardly such that the electric resistance of the heaters is varied and gradually is increased towards a lower portion (30b, 31) of the heaters, whereby the emitted power at constant voltage across the heaters will correspondingly increase downwards the heaters.

3. The method according to claim 2, wherein said heaters (30) encircling said pot (40) are arranged at different distances from each other, the distances being dependent on the position of the heaters in relation to a gathering opening (12) positioned at a furnace door (11) in the pot furnace (1) and being closer to each other where the heat loss is largest.

4. The method according to claim 1, wherein the pot furnace comprises a variety of gas or oil burners (32, 33) arranged at the furnace (1), wherein a first burner (32) is heating the bottom of the pot (40) while a secondary burner/secondary burners (33) is/are maintaining the proper initial temperature profile in the upper portion of the furnace chamber.

5. A pot furnace (1) for the melting of glass batch materials for the production of melted glass, comprising: a furnace body (10) with a furnace chamber, a furnace door (11) and a gathering opening (12), the furnace chamber having a floor surface (21), a ceiling (22) and a substantially vertical inside wall surface (20), a pot (40) for receiving the glass batch to be melted and comprising side walls and a bottom surface (41), and electric heaters (30), each equipped with its own power inlet (34), arranged hanging vertically aligned from the ceiling (22) and extending towards the floor surface of the furnace chamber, wherein the pot (40) is arranged above the floor surface (21) of the furnace chamber on top of supports (25), and the electric heaters are arranged to encircle the pot and extend beyond the bottom surface (41) of the pot (40), ensuring that this bottom surface (41) will be fully exposed to direct radiation from the lower portions of the electric heaters (30), and wherein means are provided for blowing cooling air, primarily used to prevent condensation of the glass at the power terminal inlets (34) of the heaters, along the heaters for cooling said heaters downwardly such that the electric resistance of the heaters is varied and gradually is increased towards a lower portion (30b, 31) of the heaters, whereby the emitted power at a constant voltage across the heaters will correspondingly increase downwards along the heaters.

6. The pot furnace according to claim 5, wherein the distance between said electric heaters (30) encircling said pot are arranged at different distances from each other, the distances depending on the position of the heaters in relation to said gathering opening (12) positioned at said furnace door (11) in the pot furnace (1) and being closer to each other where the heat loss is largest.

7. The pot furnace according to claim 5 or 6, wherein said electric heaters (30) are arranged into arrays each connected to its separate power feeding line to facilitate differentiated feeding of power to each one of such arrays.

8. A pot furnace (10) for the melting of glass batch materials for production of melted glass in which furnace a temperature profile in a pot (40), having side walls and a bottom (41) for receiving the glass batch to be melted, is formed such that melting of the glass batch in said pot is primarily effected from the bottom and upwards and secondarily from the side walls and inwards inside said pot (40), said furnace (10) comprising a furnace body with a furnace chamber, a furnace door (11) and a gathering opening (12) and having burners supplied with gas or oil, wherein below said bottom (41) of said pot (40) there is arranged a space (35) which is supplied with heat through an inclined channel (36), whereby a first burner (32) is arranged at one end of said channel (36), and the other end of said channel (36) is discharging into the space (35) underneath the pot (40), and at least one secondary channel (37) is supplying the furnace chamber with heat by having a secondary burner (33) at a first end, and the other end discharging into the furnace chamber.

9. The pot furnace according to claim 8, wherein said space (35) is formed by an intercommunication opening in the floor and having a diameter less than the outer diameter of said pot (40).

10. The pot furnace according to claim 9, wherein said space (35) comprises support members (61, 62) supporting said pot (40).

11. The pot furnace according to any of claims 8 - 10, wherein said channels (36, 37) are discharging radially or tangentially into the furnace or discharging into the furnace utilizing a combination thereof.

12. The pot furnace according to any of the preceding claims 5 - 11, wherein the gathering opening (12) is formed in such a way that a matching stone (60) can be fitted to the side wall of said pot (40) to prevent the batch or gathered glass from entering into the furnace chamber between said pot (40) and said furnace door (11) in addition to preventing undesired heat loss.

13. The pot furnace according to any of the preceding claims 5 - 12, wherein said pot is provided with a mouth (45) or an elevated edge to accomplish a distance between said pot (40) and said furnace door (11).

14. The pot furnace according to claim 13, wherein the lower inside surface of said mouth (45) of the pot or the elevated edge is outwardly inclined downwards to prevent melted glass from flowing back into said pot (40).

15. The pot furnace according to any of the preceding claim 5 - 14, wherein said pot (40) is arranged slightly inclined towards the furnace door to further increase the space between said pot and said furnace door in order to better maintain the proper temperature profile.

16. The pot furnace according to any of the preceding claims 5 - 15, wherein an exit channel (50) leading into a pocket for glass spill is arranged vertically and presents a first part (51) beginning in the space (35) underneath the pot and a second part (52) of a larger cross section discharging into the pocket for glass spill.

## Patentansprüche

1. Verfahren zum Schmelzen von Glasgemengematerialien in einem Tiegel (40) innerhalb eines Ofens (1) zur Herstellung von geschmolzenem Glas, welches primär für die manuelle Verarbeitung vorgesehen ist und die Verfahrensschritte Füllen des Tiegels (40) mit dem zu schmelzenden und in Glas umzuwandelnden Gemenge und Erhitzen des Tiegels enthält, um geschmolzenes Glas zu erzeugen, wobei die Verfahrensschritte das Erhitzen des Tiegels von unten und entlang seines Umfangs von der Seite und das Ausbilden eines Temperaturprofils in dem Tiegel derart umfassen, daß das Schmelzen des Glasgemenges in dem Tiegel (40) primär von unten ausgehend bewirkt wird und nach oben gerichtet ist und sekundär von den Seitenwänden ausgehend nach innen gerichtet in dem Tiegel (40) erfolgt, wobei das Temperaturprofil erzeugt wird durch Anordnung eines räumlichen Bereichs zwischen dem Tiegel (40) und einer Bodenfläche (21) in dem Ofen und dabei diese Region anfänglich auf eine etwas höhere Temperatur erhitzt wird als der übrige Teil der Ofenkammer, wobei das Schmelzen des Gemenges im wesentlichen von unten und von den Seiten des Tiegels in Richtung auf den oberen Teil des Tiegels fortschreitet.

2. Verfahren nach Anspruch 1, **dadurch gekennzeichnet**, daß der Tiegelofen eine Vielzahl von vertikal herabhängenden elektrischen Heizelementen (30) aufweist, von denen jedes mit einem eigenen Eingangsanschluß (34) für elektrische Leistung versehen ist und die um den Tiegel (40) herum angeordnet sind, wobei der Boden des Tiegels der von den Heizelementen (30) direkt abgestrahlten Wärme ausgesetzt ist und Kühlungsluft, die primär dafür verwendet wird, um die Kondensation von Glas an den Eingangsanschlüssen 34) der Heizelemente zu verhindern, entlang der Heizelemente (30) eingeblasen wird, um die Heizelemente nach unten gerichtet derart zu kühlen, daß der elektrische Widerstand der Heizelemente verändert wird und in Richtung auf den unteren Teil (30b, 31) der Heizelemente schrittweise erhöht wird, wobei die abgestrahlte Leistung bei einer über die Heizelemente konstanten Spannung entlang der Heizelemente nach unten entsprechend zunimmt.

3. Verfahren nach Anspruch 2, **dadurch gekennzeichnet**, daß die auf einem Kreis um den Tiegel (40) angeordneten Heizelemente (30) in verschiedenen Abständen voneinander angeordnet sind, wobei die Abstände von der Position der Heizelemente in Bezug auf eine Beladeöffnung (12) abhängen, die an einer Ofentür (11) des Tiegelofens (1) angeordnet ist, wobei die Heizelemente dort dichter aneinander liegen, wo der Wärmeverlust am größten ist.

4. Verfahren nach Anspruch 1, **dadurch gekennzeichnet**, daß der Tiegelofen eine Vielzahl von Gas- oder Ölbrennern (32, 33) aufweist, die an dem Ofen (1) angeordnet sind, wobei ein erster Brenner (32) das Bodenteil des Tiegels (40) erhitzt, während mindestens ein sekundärer Brenner (33) das anfängliche, geeignete Temperaturprofil in dem oberen Teil der Ofenkammer aufrechterhält.

5. Tiegelofen (1) zum Schmelzen von Glasgemengematerialen für die Herstellung von geschmolzenem Glas, umfassend: einen Ofenkörper (10) mit einer Ofenkammer, einer Ofentür (11) und einer Beladeöffnung (12), wobei die Ofenkammer eine Bodenfläche (21), eine Decke (22) und eine im wesentlichen vertikale innere Wandfläche (20) aufweist, einen Tiegel (40) zur Aufnahme des zu schmelzenden Glasgemenges, der Seitenwände und eine Bodenfläche (41) aufweist, und elektrische Heizelemente (30), von denen jedes mit seinem eigenen Eingangsanschluß (34) für elektrische Leistung versehen ist, und die vertikal herabhängend von der Decke (22) und sich in Richtung auf die Bodenfläche der Ofenkammer erstreckend angeordnet sind, wobei der Tiegel (40) oberhalb der Bodenfläche (21) der Ofenkammer auf Stützen (25) angeordnet ist und die elektrischen Heizelemente derart angeordnet sind, daß sie auf einem Kreis um den Tiegel angeordnet sind und sich über die Bodenfläche (41) des Tiegels (40) hinaus erstrecken, womit sichergestellt ist, daß diese Bodenfläche (41) der direkten Strahlung von den unteren Bereichen der elektrischen Heizelemente (30) vollständig ausgesetzt ist, und wobei eine Vorrichtung vorgesehen ist, um Kühlungsluft, die primär dafür verwendet wird, um Kondensation von Glas an den Eingangsanschlüssen (34) der Heizelemente zu verhindern, entlang der Heizelemente eingeblasen wird, um die Heizelemente nach unten gerichtet derart zu kühlen, daß der elektrische Widerstand der Heizelemente verändert wird und in Richtung auf einen unteren Teil (30b, 31) der Heizelemente stufenweise zunimmt, wobei die abgestrahlte Leistung bei einer über die Heizelemente konstanten Spannung entlang der Heizelemente nach unten zunimmt.

6. Tiegelofen nach Anspruch 5**, dadurch gekennzeichnet**, daß die auf einem Kreis um den Tiegel angeordneten elektrischen Heizelemente (30) in verschiedenen Abständen voneinander angeordnet sind, wobei die Abstände von der Position der Heizelemente in Bezug auf die an der Ofentür (11) des Tiegelofens (1) angeordnete Beladeöffnung (12) abhängen, wobei die Heizelemente dort dichter aneinander liegen, wo der Wärmeverlust am größten ist.

7. Tiegelofen nach Anspruch 5 oder 6, **dadurch gekennzeichnet**, daß die elektrischen Heizelemente (30) in Form von Vielfachanordnungen oder Arrays angeordnet sind, wobei jedes Array mit einer eigenen Leistungszuführungsleitung verbunden ist, um eine differenzierte Zuführung von elektrischer Leistung zu jedem dieser Arrays zu gewährleisten.

8. Tiegelofen (10) für das Schmelzen von Glasgemengematerialien zur Herstellung von geschmolzenem Glas, in welchem Ofen ein Temperaturprofil in einem Tiegel (40), der Seitenwände und ein Bodenteil (41) zur Aufnahme von zu schmelzendem Glasgemenge aufweist, derart gebildet wird, daß das Schmelzen des Glasgemenges in dem Tiegel primär von dem Bodenteil ausgehend bewirkt wird und nach oben gerichtet ist und sekundär von den Seitenwänden ausgehend nach innen gerichtet in dem Tiegel (40) bewirkt wird, wobei der Ofen (10) einen Ofenkörper mit einer Ofenkammer, einer Ofentür (11) und einer Beladeöffnung (12) aufweist, und Brenner, denen Gas oder Öl zugeführt wird, wobei unterhalb des Bodenteils (41) des Tiegels (40) ein Raum (35) angeordnet ist, welchem durch einen geneigten Kanal (36) Wärme zugeführt wird, wobei ein erster Brenner (32) an einem Ende des Kanals (36) angeordnet ist und das andere Ende des Kanals (36) in den Raum (35) unterhalb des Tiegels (40) mündet und wobei mindestens ein sekundärer Kanal (37) der Ofenkammer durch einen an einem ersten Ende angeordneten sekundären Brenner (33) Wärme zuführt, wobei das andere Ende in die Ofenkammer mündet.

9. Tiegelofen nach Anspruch 8, **dadurch gekennzeichnet**, daß der Raum (35) durch eine Zwischenverbindungsöffnung in dem Boden gebildet wird und einen Durchmesser aufweist, der kleiner ist als der äußere Durchmesser des Tiegels (40).

10. Tiegelofen nach Anspruch 9, **dadurch gekennzeichnet**, daß der Raum (35) Stützelemente (61, 62) zur Unterstützung des Tiegels (40) aufweist.

11. Tiegelofen nach einem der Ansprüche 8 bis 10, **dadurch gekennzeichnet**, daß die Kanäle (36, 37) radial oder tangential oder durch eine Kombination daraus in den Ofen münden.

12. Tiegelofen nach einem der Ansprüche 5 bis 11, **dadurch gekennzeichnet**, daß die Beladeöffnung (12) derart gebildet wird, indem ein Anpassungsstein (60) an die Seitenwand des Tiegels (40) angesetzt wird, um über die Vermeidung unerwünschten Wärmeverlusts hinaus zu verhindern, daß das Gemenge oder das aufgenommene Glas in die Ofenkammer zwischen dem Tiegel (40) und der Ofentür (11) eindringt.

13. Tiegelofen nach einem der Ansprüche 5 bis 12, **dadurch gekennzeichnet**, daß der Tiegel eine Schnabelöffnung (45) oder eine erhöhte Kante aufweist, um den Abstand zwischen dem Tiegel (40) und der Ofentür (11) zu überbrücken.

14. Tiegelofen nach Anspruch 13, **dadurch gekennzeichnet**, daß die untere innere Oberfläche der Schnabelöffnung (45) des Tiegels oder der erhöhten Kante nach außen eine Neigung nach unten aufweist, um zu verhindern, daß geschmolzenes Glas in den Tiegel (40) zurückfließt.

15. Tiegelofen nach einem der Ansprüche 5 bis 14, **dadurch gekennzeichnet**, daß der Tiegel (40) in Richtung auf die Ofentür etwas geneigt angeordnet ist, um den Abstand zwischen dem Tiegel und der Ofentür weiter zu erhöhen, um das geeignete Temperaturprofil besser aufrechterhalten zu können.

16. Tiegelofen nach einem der Ansprüche 5 bis 15, **dadurch gekennzeichnet**, daß ein Ausgangskanal (50), der in einen Behälter für ausgelaufenes Glas führt, vertikal angeordnet ist und einen ersten Teil (51) aufweist, der in dem Raum (35) unterhalb des Tiegels beginnt, und einen zweiten Teil (52) von größerem Querschnitt aufweist, der in den Behälter für ausgelaufenes Glas mündet.

## Revendications

1. Méthode pour la fusion par cuvée de matières de fabrication de verre dans un pot (40) à l'intérieur d'un four (1), pour la production de verre fondu principalement destiné à un traitement manuel, comprenant les étapes de remplissage du pot (40) avec la cuvée de matières à transformer par fusion en verre, et de chauffage du pot pour obtenir le verre fondu, comportant un chauffage du pot par le dessous et par le côté autour de sa circonférence et la génération d'un profil de température dans le pot de sorte que la fusion de la cuvée de verre dans le pot (40) s'effectue principalement à partir du bas et vers le haut et secondairement à partir des parois latérales et vers l'intérieur dans le pot (40), ledit profil de température étant obtenu par création d'un espace entre le pot (40) et une surface de sole tournée vers le haut (21) dans le four de manière à chauffer initialement cet espace à une température légèrement supérieure à celle du reste de la chambre du four, afin que la fusion de la cuvée progresse essentiellement à partir du bas et à partir des côtés du pot vers la partie supérieure du pot.

2. Méthode suivant la revendication 1, ledit four à pot comprenant divers éléments chauffants électriques verticalement suspendus (30), dont chacun est équipé de sa propre entrée d'alimentation en énergie (34), agencés autour du pot (40) de sorte que le fond du pot est exposé à la chaleur directement rayonnée par les éléments chauffants (30), et de l'air de refroidissement principalement utilisé pour empêcher la condensation de verre aux entrées d'alimentation en énergie (34) des éléments chauffants est soufflé le long des éléments chauffants (30) pour refroidir lesdits éléments chauffants vers le bas d'une manière telle que la résistance électrique des éléments chauffants varie et augmente progressivement vers une partie inférieure (30b, 31) des éléments chauffants, la puissance émise à tension constante le long des éléments chauffants augmentant ainsi de façon correspondante vers le bas des éléments chauffants.

3. Méthode suivant la revendication 2, dans laquelle lesdits éléments chauffants (30) qui encerclent ledit pot (40) sont placés à des distances différentes les uns des autres, les distances étant fonction de la position des éléments chauffants par rapport à une ouverture de recueil (12) prévue à l'endroit d'une porte de four (11) dans le four à pot (1), et lesdits éléments chauffants étant plus proches les uns des autres aux endroits où la perte de chaleur est la plus grande.

4. Méthode suivant la revendication 1, dans laquelle le four à pot comprend différents brûleurs à gaz ou à fioul (32, 33) agencés dans le four (1), de sorte qu'un premier brûleur (32) chauffe le fond du pot (40) tandis qu'un ou des brûleurs secondaires (33) maintiennent le profil de température initial approprié dans la partie supérieure de la chambre du four.

5. Four à pot (1) pour la fusion par cuvée de matières de base du verre, pour la production de verre fondu, comprenant : un corps de four (10) définissant une chambre de four, une porte de four (11) et une ouverture de recueil (12), la chambre de four comportant une sole (21), un plafond (22) et une surface de paroi intérieure sensiblement verticale (20), un pot (40) pour recevoir la cuvée de verre à fondre et comportant des parois latérales et une surface inférieure (41), et des éléments chauffants électriques (30), équipés chacun de sa propre entrée d'alimentation en énergie (34), verticalement suspendus en ligne au plafond (22) et s'étendant vers la surface de la sole de la chambre du four, dans lequel le pot (40) est installé au-dessus de la surface de la sole (21) de la chambre du four sur des supports (25) et les éléments chauffants électriques sont agencés de manière à encercler le pot et à s'étendre au-delà de la surface inférieure (41) du pot (40), ce qui assure que cette surface inférieure (41) sera complètement exposée au rayonnement direct des parties inférieures des éléments chauffants électriques (30), et dans lequel des moyens sont prévus pour souffler de l'air de refroidissement, principalement utilisé pour empêcher la condensation du verre aux entrées d'alimentation en énergie (34) des éléments chauffants le long des éléments chauffants pour refroidir lesdits éléments chauffants vers le bas de sorte que la résistance électrique des éléments chauffants varie et augmente progressivement vers une partie inférieure (30b, 31) des éléments chauffants, la puissance émise à tension constante le long des éléments chauffants augmentant ainsi de façon correspondante vers le bas le long des éléments chauffants.

6. Four à pot suivant la revendication 5, dans lequel la distance entre lesdits éléments chauffants électriques (30) encerclant ledit pot sont placés à différentes distances les uns des autres, les distances dépendant de la position des éléments chauffants par rapport à ladite ouverture de recueil (12) située à l'endroit de ladite porte de four (11) dans le four à pot (1), et lesdits éléments chauffants étant plus proches les uns des autres à l'endroit où la perte de chaleur est la plus grande.

7. Four à pot suivant la revendication 5 ou la revendication 6, dans lequel lesdits éléments chauffants électriques (30) sont agencés en groupes connectés chacun à sa ligne séparée d'alimentation en énergie, afin de faciliter l'alimentation différenciée en énergie de chacun de ces groupes.

8. Four à pot (10) pour la fusion par cuvée de matières de base du verre afin de produire du verre fondu, dans lequel on crée un profil de température dans un pot (40) ayant des parois latérales et un fond (41) pour la réception de la cuvée de verre à fondre, d'une manière telle que la fusion de la cuvée de verre dans ledit pot s'effectue principalement à partir du fond et vers le haut et secondairement à partir des parois latérales et vers l'intérieur dans ledit pot (40), ledit four (10) comprenant un corps de four avec une chambre de four, une porte de four (11) et une ouverture de recueil (12) et comportant des brûleurs à gaz ou à fioul, dans lequel, au-dessous dudit fond (41) dudit pot (40), est agencé un espace (35) qui est alimenté en chaleur par l'intermédiaire d'un canal incliné (36) de sorte qu'un premier brûleur (32) est prévu à une extrémité dudit canal (36) et que l'autre extrémité dudit canal (36) débouche dans l'espace (35) au-dessous du pot (40), et au moins un canal secondaire (37) alimente la chambre du four en chaleur par montage d'un brûleur secondaire (33) à une première extrémité du canal secondaire tandis que l'autre extrémité débouche dans la chambre du four.

9. Four à pot suivant la revendication 8, dans lequel ledit espace (35) est défini par une ouverture d'intercommunication ménagée dans la sole et ayant un diamètre inférieur au diamètre extérieur dudit pot (40).

10. Four à pot suivant la revendication 9, dans lequel ledit espace (35) comprend des supports (61, 62) qui supportent ledit pot (40).

11. Four à pot suivant une quelconque des revendications 8 à 10, dans lequel lesdits canaux (36, 37) débouchent radialement ou tangentiellement dans le four, ou bien débouchent dans le four au moyen d'une combinaison de ces dispositions.

12. Four à pot suivant une quelconque des revendications précédentes 5 à 11, dans lequel l'ouverture de recueil (12) est formée d'une manière telle qu'une brique de raccordement (60) peut être ajustée à la paroi latérale dudit pot (40) pour empêcher la cuvée ou le verre cueilli de passer dans la chambre du four entre ledit pot (40) et ladite porte de four (11), en plus empêcher une perte indésirable de chaleur.

13. Four à pot suivant une quelconque des revendications précédentes 5 à 12, dans lequel ledit pot comporte une bouche (45) ou un bord relevé pour laisser une certaine distance entre ledit pot (40) et ladite porte de four (11).

14. Four à pot suivant la revendication 13, dans lequel la surface intérieure inférieure de ladite bouche (45) du pot ou du bord relevé est inclinée vers l'extérieur et vers le bas, afin d'empêcher le verre fondu de revenir dans ledit pot (40).

15. Four à pot suivant une quelconque des revendications précédentes 5 à 14, dans lequel ledit pot (40) est légèrement incliné vers la porte du four afin d'augmenter encore l'espace entre ledit pot et ladite porte du four, pour mieux maintenir le profil de température voulu.

16. Four à pot suivant une quelconque des revendications précédentes 5 à 15 dans lequel un canal de sortie (50) aboutissant dans une poche de déchets de verre est agencé verticalement et comprend une première partie (51) commençant dans l'espace (35) au-dessous du pot et une deuxième partie (52) de plus grande section transversale qui débouche dans la poche pour déchets de verre.
